# EUROPEAN PATENT APPLICATION

(11) **EP 1 895 770 A1**
(43) Date of publication of application: **05.03.2008**
(21) Application number: 06018502.2
(22) Date of filing: 04.09.2006
(51) Int. Cl.: H04N 5/445, H04N 5/00, H04N 7/167

(54) **Personalizing any TV gateway**

(71) Applicant: Nokia Siemens Networks GmbH & Co. KG, 81541 München (DE)
(72) Inventor: Goeman, Stefan, 2640 Mortsel (BE); Uytterhoeven, Luc, 2250 Olen (BE)
(74) Representative: Fischer, Michael

(57) **Abstract**

The present invention is a method and a system for personalizing any TV gateway (GW), comprising a TV gateway authentication infrastructure (GAI) in communication with external networks (EN) and a user authentication infrastructure (UAI) in communication with the external networks (EN); further comprising
- by the TV gateway authentication infrastructure (GAI), authenticating the TV gateway (GW) accessing the external networks (EN);
- by the user authentication infrastructure (UAI), authenticating an end-user via end-user credentials contained in a personal tamper resistant device (TRD) in communication with the TV gateway (GW);
- if the end-user is authenticated, loading the end-user profile on the TV-gateway (GW);
- by the TV gateway (GW), enabling the fruition of authorized end-user TV content on the TV display (TVd), by using TV service credentials contained in the loaded end-user profile.

## Description

The present invention relates to a method according the preamble of claim 1 and a system according the preamble of claim 7.

In digital television, the devices that receive the digital media streams containing the TV content are, in this context, denoted as TV gateways.

Typical examples of TV gateway are set top boxes, home gateways and residential gateways. The TV gateway is typically a shared device, meaning that there is only one of these appliances in a household.

An important issue in digital television is parental control, i.e. the capability of enabling parents to control the content watched by their children.

In order to provide parental control capabilities, methods to personalize the TV gateways have been introduced. The TV gateway personalization process can be compared to the login process on PCs.

Methods for personalizing the TV gateway typically include providing security credentials to the TV gateway for identifying the end-users, e.g. parents may be defined as "super users" with more privileges than their children, who may be defined as "normal users".

Unfortunately, current TV gateways are coupled to the particular household, meaning that only members of the household have security credentials to personalize the devices.

The drawback is that other persons, e.g. other family relatives or neighbors, are unable to use and to personalize the TV gateway of that particular household.

To date, personalization of a TV gateway is typically performed by providing every member of a household with a PIN.

However, also the use of the PIN to personalize the specific TV gateway has the drawback that only those that are members of the specific household are able to use and personalize the specific device.

It is therefore the aim of the present invention to overcome the above mentioned drawbacks, in particular by providing a method and a system for personalizing any TV gateway in a secure way.

The aforementioned aim is achieved by a method and a system for personalizing any TV gateway of a digital TV system comprising a TV gateway, a TV display connectable to the TV gateway, the TV gateway being connected to external networks; the method characterized in that:
- the digital TV system further comprises a TV gateway authentication infrastructure in communication with the external networks and a user authentication infrastructure in communication with the external networks; the invention comprising:
   a) by the TV gateway authentication infrastructure, authenticating the TV gateway accessing the external networks;
   b) by the user authentication infrastructure, authenticating the end-user via end-user credentials contained in a personal tamper resistant device (TRD) in communication with the TV gateway;
   c) if the end-user is authenticated, loading the end-user profile on the TV-gateway;
   d) by the TV gateway, enabling the fruition of authorized end-user TV content on the TV display, by using TV service credentials contained in the loaded end-user profile.

In the invention, item a) may be preferably achieved via gateway specific credentials.

In the invention, item b) may advantageously be achieved via end-user specific credentials stored on a tamper resistant device.

In the invention, the personal tamper resistant device may conveniently be in wired communication with the TV gateway via a reader integrated within the TV gateway or may be in wireless communication via a reader external to the TV gateway.

In the invention, the TV gateway may preferably be selected from the group consisting of:
- set top boxes;
- home gateways;
- residential gateways.

In the invention, the personal tamper resistant device may conveniently be selected from the group consisting of:
- smart cards;
- SIM cards;
- USIM cards;
- electronic ID cards;
- social security cards.

The proposed invention enables the TV gateway to be personalized according to the end-user identity.

The proposed invention decouples the authentication process of the TV gateway towards the network from the authentication process of the end-user towards her/his service bundle.

The proposed invention is secure and user-friendly. In fact, by using a tamper resistant device as taught in the present invention, more security is guaranteed as opposed to the use of PIN numbers alone where a child can overlook their parents' PZN number.

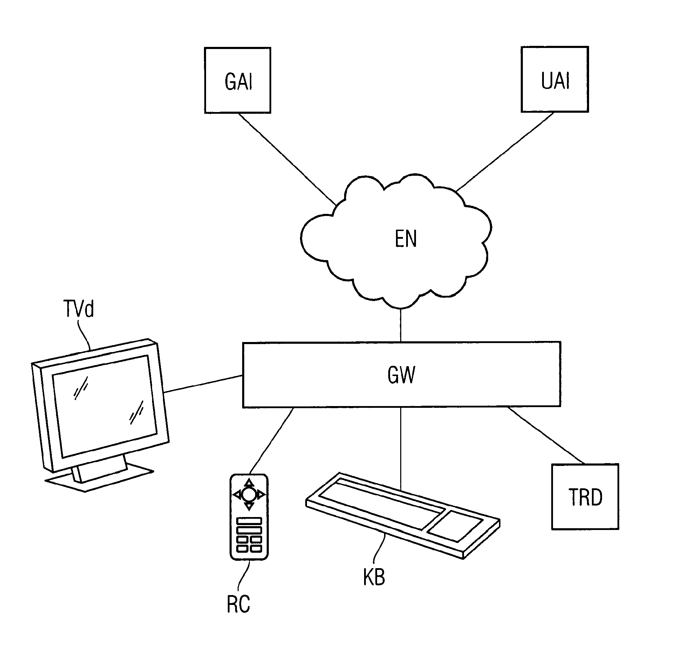

The invention will now be described in preferred but not exclusive embodiments with reference to the accompanying drawing, wherein:
- The only figure: illustrates a block diagram of an example embodiment according to the present invention.

The only figure shows a digital TV display TVd connected to a TV gateway GW. The TV gateway GW may be controlled by a keyboard KB and/or by a remote control device RC. A personal tamper resistant device TRD is used, according to the present invention, for authenticating the user who is accessing the TV gateway GW.

The personal tamper resistant device TRD may be a personal electronic smart card delivered by the TV service provider to the end user subscribing to a TV service bundle. Alternatively, the personal tamper resistant device TRD may be a personal electronic card already in possession of the end-user, e.g. SIM/USIM cards, electronic ID cards as being introduced in several European countries and social security cards as used in the United States.

The TV gateway GW may have a reader device for accessing the personal tamper resistant device TRD. Alternatively, when the personal tamper resistant devices are SIM/USIM cards, the TV gateway may have a Bluetooth interface for accessing the SIM/USIM card in the mobile phone of the end-user.

For SIM/USIM cards, the end-user authentication is based on the fact that such cards belong to the end-user and not to the TV gateway. Moreover, the end-user authentication is based on a long term secret shared between the mobile operator and the end-user. More specifically, for USIM cards, the authentication protocols to be used are the ones defined in 3GPP industry specifications.

For electronic smart cards, the security credentials present on such cards are typically in form of public-private key pairs. Thus, when the personal tamper resistant device TRD contains a public-private key pair, the TV gateway GW has access only at the public key and, as regards the private key, the related security calculations take place on the tamper resistant device TRD itself.

The type of connections between the TV gateway GW and the tamper resistant device TRD may differ depending on the used type of tamper resistant device TRD. In fact, depending on the used tamper resistant devices TRD, their reader devices may be external or internal to the TV gateway appliance GW.

For example, for smart cards, the card reader may preferably be internally integrated in the TV gateway device GW. Instead, for a SIM/USIM cards, the card reader may preferably be external, i.e. integrated in the mobile phone device. In such a case, the connection between the TV gateway GW and the card reader may preferably be a wireless connection, e.g. a Bluetooth one.

The TV gateway GW is connected to the outside world via different external networks EN, e.g. an IP network for receiving the digitized video signals and a general IP link to the operator network. In further embodiments according to the present invention, combinations of IP and DVB networks EN are also possible. In this case, the DVB network EN will be used for receiving the digitized video signals. The IP link EN provides a connection to the operator network. This IP link is used to authenticate the TV gateway GW and for authentication of the end-user.

The only figure shows two different authentication infrastructures, i.e. the TV gateway authentication infrastructure GAI and the end-user authentication infrastructure UAI. According to the present invention, the authentication of the TV gateway GW and the authentication of the end-user are handled separately.

The role of the TV gateway authentication infrastructure GAI is to indicate to the external networks EN, e.g. the IP network of an ISP, that the specific given TV gateway GW is a legitimated device and is allowed to access to the external networks EN.

The TV gateway authentication infrastructure GAI comprises the infrastructure and protocols required for the authentication of the TV gateways GW. Typically, the TV gateway authentication infrastructure protocols run in lower networking protocol layers, directly on top of the link layer protocols, e.g. EAPOL in WLAN, or on top of IP such as IPsec protocol.

In order to be authenticated, the TV gateway device GW is provided with its proper gateway-dependant security credentials. The type of used gateway-dependant security credentials depend on the type of authentication protocol and on the underlying network security that might or might not already be present, e.g. security by wire or reduced security by wireless.

The gateway-dependant security credentials are to be stored within TV gateway device GW itself in a secure, tamper resistant, manner, in order to avoid cracking of the TV gateway GW and retrieving its security credentials by hackers.

Alternatively, in a further embodiment of the present invention, the gateway-dependant security credentials may be stored externally from the TV gateway device GW in an ad-hoc tamper resistant device to be inserted within a specific gateway reader.

Examples of TV gateway authentication infrastructure protocols to be used include EAP protocols which allow a variety of different type of authentication mechanisms such as CHAP and AKA used in EAP-CHAP and EAP-AKA respectively.

Other examples of TV gateway authentication infrastructure protocols to be used include IPsec protocol. IPsec protocol provides security on top of the IP protocol for authenticating the TV gateway GW with the network EN and for establishing a secure connection between them. IPsec protocol supports several authentication protocols using different types of credentials. The authentication protocol in the IPsec suite is the IKE protocol.

In general the TV gateway authentication may be based on: i) shared secret keys between the two authenticating parties;
ii) public-private key pairs (using x.509 certificates) or
iii) by using specific EAP authentication mechanisms such as CHAP or AKA.

The role of the end-user authentication infrastructure UAI is to authenticate the end-user. As a consequence, after authentication, the end-user is enabled to utilize his/her TV service bundle, i.e. the personalized TV services he/she ordered.

The end-user authentication process is based on his/her own personal tamper resistant device TRD which contains the security credentials to be used for his/her authentication. As above explained, end-user authentication may be based on private-public key technology.

The User Authentication Infrastructure UAI preferably authenticates the end-user after the TV gateway has already been authenticated.

Typically, the protocols used for user authentication are application layer protocols and run in higher protocol layers, e.g. TLS protocol used to secure HTTP traffic.

In order to be authenticated, the end-users are provided with end-user security credentials_contained in their personal tamper resistant device TRD. The types of end-user credentials to be used depend on the authentication protocol types and on the underlying security which may or may not already be present. Examples of end-user security credentials include public-private key pairs on smart cards, and secret key based credentials on SIM/USIM cards.

In case public-private key pairs are used, the private key is typically stored in a non-volatile secured storage space on the TRD. User authentication protocols based on private-public key pairs provide knowledge of the private key, and not the private key itself, and the certificate to the authenticating party and are more secure than protocols based on user name and passwords credentials.

The end-user, in order to choose his/her personalized TV service bundle, subscribes to a digital TV service provider and chooses the TV services he/she wishes to be subscribed to, such as for example, the desired TV channels and, in the VoD case, the desired movie types. The choice of the TV services to subscribe to may be done directly through the service provider or autonomously via the remote control RC or the keyboard KB previous insertion of the personal tamper resistant device TRD. The end-user may receive his/her personal tamper resistant device TRD from the TV service provider or may use a personal tamper resistant device TRD already in his/her possession, e.g. a smart ID-card. As a parent, the end-user may also wish to limit access possibilities to his/her children, e.g. by preventing access to certain TV channels, to certain VoD content such as adult movies. In this case, he may receive two types of user credentials, one for parents and one for children stored on the respective personal tamper resistant devices TRD. Alternatively, each person in the household may have his/her personal tamper resistant device TRD.

Thus, according to the present invention, parent control is achieved by providing the children with their own personal tamper resistant device TRD, different from the one of their parents. In fact, every personal tamper resistant device TRD allows the authentication of a particular end-user and it is associated with an end-user profile describing, for example, the TV content such particular user is enabled to access.

The procedure of personalized his/her own TV service bundle may be performed by the end-user by direct interaction with the TV service provider, e.g. by phone. Alternatively, the end-user may select his/her own preferred TV service bundle through the TV gateway GW via the controlling devices KB, RC. In this latter case, the end-user authenticates him/herself via his/her personal tamper resistant device TRD. During the authentication end-user, the TV gateway GW is "loaded" with the end-user profile coming from the external networks EN.

The end-user, in order to enjoy the TV content he/she is subscribed to, is required to authenticate himself/herself via his/her personal tamper resistant device TRD. The reader of the TV gateway GW accesses the personal tamper resistant device TRD of the end-user and, in turn, through a connection with the user authentication infrastructure UAI, the end-user is authenticated by the user authentication infrastructure UAI. Before the end-user authentication takes places, the TV gateway GW is authenticated by the gateway authentication infrastructure GAI.

After positive end-user's authentication, the TV gateway Gw is loaded, in a pull or push manner, with the profile information of the specific end-user, which may have been stored within the user authentication infrastructure UAI. The end-user profile information includes, for example, details on the TV services the end-user is authorized to utilize, e.g. TV channels and VoD items, and the necessary security credentials for the authorized TV services, e.g. the channel decryption keys.

By loading the TV gateway GW with the end-user personal profile, the TV gateway GW is enabled to access only the TV services the specific end-user is authorized to. In fact, the TV gateway GW is unable to access any other content, because the security credentials necessary to access such other content are not included in the end-users profile, and thus, as a consequence, are not downloaded to the TV gateway during the end-user authentication process.

Thus, according to the present invention, the TV gateway is personalized with a specific TV service bundle in accordance with the specific authorization of the specific accessing end-user.

The fruition of TV content by the end user over the TV display TVd is allowed in a secure manner. Advantageously, a neighbor, a relative of the household owner is enabled to access and enjoy his own TV content by accessing the TV gateway GW of the household owner and by authenticating himself/herself via his/her personal tamper resistant device TRD.

### List of used acronyms

- 3GPP: 3rd Generation Partnership Project
- AKA: Authentication and Key Agreement
- CHAP: Challenge Handshake Authentication Protocol
- DVB: Digital Video Broadcasting
- EAP: extended authentication protocol
- EAPOL: EAP over LAN
- ID: IDentification
- IKE: Internet Key Establishment
- ISP: Internet Service Provider
- IP: Internet Protocol
- IPsec: IP Security
- LAN: Local Area Network
- PC: Personal Computer
- PKI: Public Key Infrastructure
- PIN: Personal Identification Number
- SIM: Subscriber Identity Module
- TLS: Transport Layer Security
- TV: Television
- USIM: Universal Subscriber Identity Module
- VoD: video on Demand
- WLAN: Wireless Local Area Network

### List of reference signs

- GAI: TV gateway authentication infrastructure
- GW: TV gateway
- EN: external network
- KB: keyboard
- RC: remote control
- TRD: tamper resistant device
- TVd: digital TV display
- UAI: user authentication infrastructure

## Claims

1. A method for personalizing any TV gateway of a digital TV system comprising a TV gateway (GW), a TV display (Tvd) connectable to the TV gateway (GW), said TV gateway (GW) being connected to external networks (EN); said method
**characterized in that**:
- said digital TV system further comprises a TV gateway authentication infrastructure (GAI) in communication with the external networks (EN) and a user authentication infrastructure (UAI) in communication with the external networks (EN);
said method comprising the steps of:
a) by the TV gateway authentication infrastructure (GAI), authenticating the TV gateway (GW) accessing the external networks (EN);
b) by the user authentication infrastructure (UAI), authenticating the end-user via end-user credentials contained in a personal tamper resistant device (TRD) in communication with the TV gateway (GW) ;
c) if the end-user is authenticated, loading the end-user profile on the TV-gateway (GW);
d) by the TV gateway (GW), enabling the fruition of authorized end-user TV content on the TV display (TVd), by using TV service credentials contained in the loaded end-user profile.

2. The method according to claim 1, wherein said step a) is achieved via gateway specific credentials.

3. The method according to any of the preceding claims, wherein said step b) is achieved via end-user specific credentials stored on a tamper resistant device (TRD).

4. The method according to any of the preceding claims, wherein said personal tamper resistant device (TRD) is in wired communication with the TV gateway via a reader integrated within the TV gateway (GW) or is in wireless communication via a reader external to the TV gateway (GW),

5. The method according to any of the preceding claims, wherein the TV gateway (GW) is selected from the group consisting of :
- set top boxes;
- home gateways;
- residential gateways.

6. The method according to any of the preceding claims, wherein the personal tamper resistant device (TRD) is selected from the group consisting of:
- smart cards;
- SIM cards;
- USIM cards;
- electronic ID cards;
- social security cards.

7. A system having means for performing the steps of the method according to any of the claims 1 to 6.
